# EUROPEAN PATENT SPECIFICATION

(11) **EP 2 910 898 B1**
(45) Date of publication and mention of the grant of the patent: **21.08.2019**
(21) Application number: 15153234.8
(22) Date of filing: 30.01.2015
(51) Int. Cl.: G01C 11/02, G01C 15/02, G01B 11/24, H01F 7/02, C09J 7/29

(54) **Method and apparatus for removably attaching photogrammetric targets to a surface**
Verfahren und Vorrichtung zur lösbaren Befestigung fotogrammetrischer Ziele auf einer Oberfläche
Procédé et appareil permettant de fixer de manière amovible des cibles photogrammétriques sur une surface

(30) Priority: 25.02.2014 US 201414189381
(43) Date of publication of application: 26.08.2015
(73) Proprietor: The Boeing Company, Chicago, IL 60606-1596 (US)
(72) Inventor: Desjardien, Matthew Ray, Chicago, IL 60606-2016 (US); Lagally, Christie Dusty, Chicago, IL 60606-2016 (US)
(74) Representative: Boult Wade Tennant LLP

(56) References cited:
- EP-A1- 1 285 955
- EP-A2- 1 473 686
- WO-A1-01/12743
- DE-A1-102011 100 723
- DE-U1-202006 010 196
- JP-A- S4 916 730
- US-A- 2 797 370
- US-A- 3 078 183
- US-A- 5 666 712
- US-A1- 2003 165 652
- US-A1- 2004 043 221
- US-A1- 2005 000 642
- US-A1- 2006 172 103
- US-A1- 2007 035 215
- US-A1- 2007 153 297
- US-A1- 2007 269 098
- US-A1- 2009 029 156

## Description

### BACKGROUND INFORMATION

### 1. Field:

The present disclosure relates generally to photogrammetry and, in particular, to targets used for photogrammetry. Still more particularly, the present disclosure relates to a method and apparatus for removably attaching photogrammetric targets to a surface of a structure.

### 2. Background:

Photogrammetry is the science of using images and, in some cases, other sensor data, to generate an output, such as, for example, without limitation, a map, a three-dimensional model, a three-dimensional point cloud, a topographical product, or some other type of output. As one example, photogrammetry may be used to generate a three-dimensional map of a surface of a structure, such as the wing of an aircraft, the fuselage of an aircraft, the hull of a ship, or some other type of structure.

Typically with photogrammetry, targets are attached onto the surface of the structure being captured in the images generated by a photogrammetric system. A target may be any item capable of being captured in an image that is distinguishable from the rest of the surface of the structure. For example, the target, which may be referred to as a photogrammetric target, may take the form of a sticker, a magnet having a particular pattern on one side of the magnet, a label, a piece of tape, or some other type of target.

Some currently available targets may cause undesired effects on the surface of the structure when these targets are attached to the surface, removed from the surface, or both. For example, without limitation, attaching a target to or removing a target from a painted surface may mark the painted surface in an undesired manner or undesirably affect the painted surface in some other way.

Thus, it may be desirable to have targets that may be removably attached onto the surface of a structure. Removably attaching a target onto a surface means attaching the target to the surface in a manner such that the target may be removed from the surface at a later time without causing any undesired effects on the surface or to the finish of the surface outside of selected tolerances.

However, removably attaching some currently available targets onto surfaces may be more time-consuming, difficult, or expensive than desired. In some cases, the attachment, removal, or both of a target that has been removably attached to the surface of a structure may cause undesired effects on the paint, finish, or other properties of the surface. Therefore, it would be desirable to have a method and apparatus that take into account at least some of the issues discussed above, as well as other possible issues.

DE102011100723 states: "The marker element (2) has multiple indicator elements (4) for determining a defined point. A fastening element (6) is provided for fastening the marker element at a definite position in space or orientation of a structure. A transmission element is provided for adapting to a defined relation between the indicator element defined point and the definite position in space. A multi-element and multiple indicator elements are provided in the marker element, where each of the indicator elements is set to reference the same spatial position or orientation. Independent claims are included for the following: (1) a retaining element for attaching a marker element; and (2) a system for referencing a spatial position or orientation to a structure."

US2007153297 states: "A photogrammetric target has a corner cube retroreflector centered within one reflective surface or between two or more reflective surfaces. A single reflective surface may be an annular disk. Alternatively, several small reflectors may be symmetrically arrayed on a lower-reflectivity surface, with a corner cube retroreflector substantially centered within the array. When such targets are mounted on a structure subject to photogrammetric measurement, the corner cube retroreflectors may be quickly and accurately located with a laser tracker or a laser surveying device, improving the accuracy of photogrammetric analysis. Since photogrammetric analysis software may locate the centroid of an image of a symmetrical array of small reflectors more accurately than the centroid of the image of a disk or other single reflective object, use of a reflector array may improve measurement accuracy."

US2006172103 states: "A tape-type magnet including a strap-shaped or tape-shaped soft magnetized substrate. The substrate has a releasing agent layer laid on an outer face of the substrate and an adhesive layer overlaid on an inner face of the substrate. The substrate is wound. At least one end of the wound substrate can be unwound and cut off into a segment. The segment can adhere to a surface of an article. The article with the tape-type magnet call then attract and attach to a magnetically attractable wall face or board face."

US2797370 states: "Magnetic tape for lifting boxes or bags and other objects."

US3078183 states: "Adhesive tape with permanent magnets therein."

DE202006010196 states: "A magnetic tape structure comprises a soft magnetic carrier material (11) with a release side and an adhesive side, a layer painted or sprayed on the release side (13) and a stamped surface structure (14). The carrier material is wound onto a roll, and the stamped surface comprises cut outs of a specific depth."

US2003165652 states: "The present application relates to a method and device for making a magnetically mountable substrate construction from a selected substrate for magnetic mounting to a structure including magnetizable material. The magnetically mountable substrate may be formed from a pressure sensitive adhesive magnetic sheet material which includes a flexible magnetic substrate having a first major surface and a second major surface, with a pressure sensitive adhesive layer adhering to the first major surface and a release layer, such as silicone release layer, adhering to the second major surface. The magnetic sheet may be provided in the form of continuous lengths wound in a roll with the release layer in contact with the pressure sensitive layer of an adjacent winding to facilitate unwinding without delamination."

### SUMMARY

In summary, there is provided a photogrammetry system for aircraft comprising: a magnetic photogrammetric target; and a spool of retaining tape, the tape comprising: a body; an engagement material associated with the body and configured for use in removably attaching the retaining tape to a surface of a structure; and a magnetic material associated with the body and configured for use in removably attaching a magnetic target to the retaining tape, wherein the retaining tape is configured to hold the magnetic target in a fixed position relative to the retaining tape using the magnetic material.

There is also provided a method for removably attaching a magnetic target of a photogrammetry system as defined in claim 1 to a surface of an aircraft, the method comprising configuring a robotic device to hold a spool of the retaining tape, rolling a portion of the retaining tape onto the surface to thereby attach, removably, the retaining tape to the surface of the aircraft using the engagement material; and attaching, removably, the magnetic target to the retaining tape using the magnetic material associated with the body of the retaining tape.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of an imaging environment in the form of a block diagram in accordance with an illustrative embodiment;
**Figure 2** is an illustration of an isometric view of a photogrammetric environment in accordance with an illustrative embodiment;
**Figure 3** is an illustration of a spool of retaining tape in accordance with an illustrative embodiment;
**Figure 4** is an illustration of a magnetic target in accordance with an illustrative embodiment;
**Figure 5** is an illustration of magnetic targets being removably attached to a surface of a fuselage of an aircraft in accordance with an illustrative embodiment;
**Figure 6** is an illustration of a plurality of stickers in accordance with an illustrative example not falling within the scope of the appended claims;
**Figure 7** is an illustration of an isometric view of a retaining member in accordance with an illustrative embodiment;
**Figure 8** is an illustration of a front view of a retaining member holding a coded target in accordance with an illustrative embodiment;
**Figure 9** is an illustration of an isometric view of a retaining member in accordance with an illustrative example not falling within the scope of the appended claims;
**Figure 10** is an illustration of a front view of a retaining member holding a target in accordance with an illustrative example not falling within the scope of the appended claims;
**Figure 11** is an illustration of a front view of a different type of retaining member in accordance with an illustrative example not falling within the scope of the appended claims;
**Figure 12** is an illustration of a front view of different types of retaining members in accordance with an illustrative example not falling within the scope of the appended claims;
**Figure 13** is an illustration of a front view of another type of retaining member in accordance with an illustrative example not falling within the scope of the appended claims;
**Figure 14** is an illustration of an isometric view of a retaining member in accordance with an illustrative embodiment;
**Figure 15** is an illustration of a front view of a retaining member in accordance with an illustrative embodiment;
**Figure 16** is an illustration of a process for removably attaching a magnetic target for a photogrammetry system to a surface of a structure in the form of a flowchart in accordance with an illustrative embodiment;
**Figure 17** is an illustration of a process for removably attaching a target for a photogrammetry system to a surface of a structure in the form of a flowchart in accordance with an illustrative embodiment;
**Figure 18** is an illustration of an illustration of a process for using photogrammetry to generate a three-dimensional model of a structure in the form of a flowchart in the form of a flowchart in accordance with an illustrative embodiment;
**Figure 19** is an illustration of an aircraft manufacturing and service method in the form of a block diagram in accordance with an illustrative embodiment; and
**Figure 20** is an illustration of an aircraft in the form of a block diagram in which an illustrative embodiment may be implemented.

### DETAILED DESCRIPTION

The illustrative embodiments recognize and take into account different considerations. For example, the illustrative embodiments recognize and take into account that it may be desirable to have a method and apparatus for removably attaching a photogrammetric target to a surface of a structure in a manner such that attachment or removal of the photogrammetric target does not cause any undesired effects on the surface. Further, the illustrative embodiments recognize and take into account that it may be desirable to have a method and apparatus that reduces the time, effort, and expense involved in removably attaching photogrammetric targets onto the surfaces of structures.

Thus, the illustrative embodiments provide a retaining member for use in removably attaching a target to a surface of a structure. In some illustrative examples, the retaining member may be configured to be handled by a robotic device such that the process of removably attaching the targets to the surface of a structure and removing the target from the surface may be automated.

Using a robotic device may allow the targets to be more precisely and quickly attached to retaining members and the retaining members to be more precisely and quickly attached onto the surface of the structure in desired locations as compared to manually attaching the targets. Increasing the precision with which targets are removably attached to surfaces through retaining members may improve the accuracy of the output generated by the photogrammetry system with which the targets are used.

Further, using a robotic device may allow the targets to be more quickly removed from the retaining members holding the targets and the retaining members to be more quickly removed from the surface of the structure. Thus, using a robotic device to removably attach targets to and remove targets from a surface of a structure may reduce the overall amount of time and effort needed for these processes, while achieving a desired level of precision in these processes.

Further, using a robot may allow these processes to be repeated for different surfaces more efficiently and precisely. For example, using a robotic device may allow the processes of removably attaching and removing to be repeatedly performed for different surfaces of the same structure or different structures with a desired level of speed and precision.

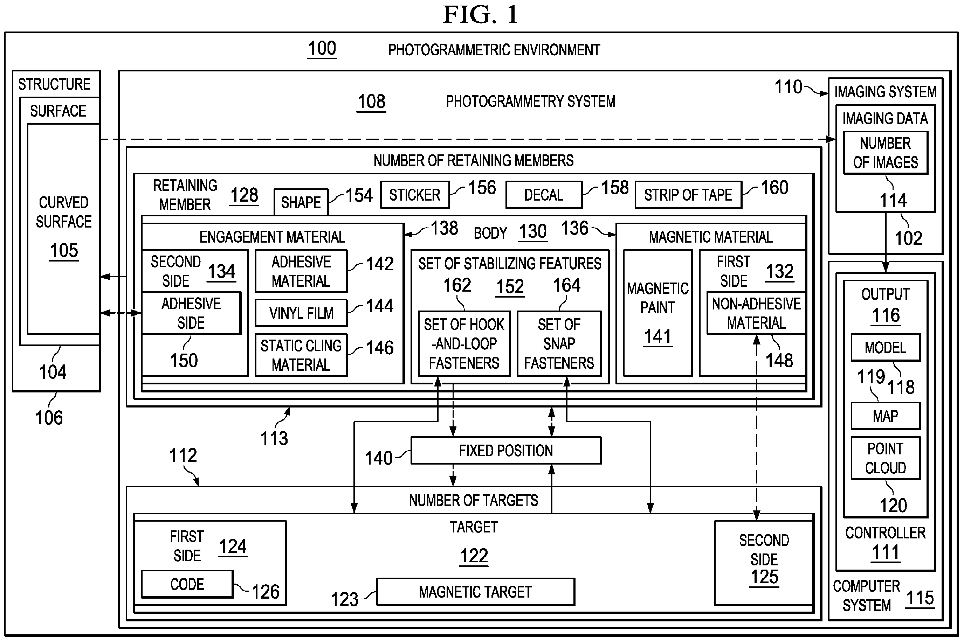

Referring now to the figures and, in particular, with reference to **Figure 1**, an illustration of an imaging environment is depicted in the form of a block diagram in accordance with an illustrative embodiment. In this illustrative example, photogrammetric environment **100** may be an example of an environment in which imaging data **102** of surface **104** of structure **106** may be generated using photogrammetry system **108**.

Structure **106** may take a number of different forms. For example, without limitation, structure **106** may take the form of an aircraft, the wing of an aircraft, the fuselage of an aircraft, a ship, the hull of a ship, the deck of a ship, a skin panel, a spherical structure, or some other type of structure. In one illustrative example, surface **104** may be substantially planar. In other illustrative examples, surface **104** may take the form of curved surface **105.** Curved surface **105** may have any number of curvatures along curved surface **105**.

As depicted, photogrammetry system **108** may include imaging system **110**, controller **111**, number of targets **112**, and number of retaining members **113**. As used herein, a "number of" items may include one or more items. In this manner, number of targets **112** may include one or more images.

Imaging system **110** may be used to generate imaging data **102.** Imaging data **102** may take the form of number of images **114** in one illustrative example. Imaging system **110** may be implemented using any number of electro-optical imaging devices, infrared imaging devices, stereo cameras, other types of imaging devices, or some combination thereof. Controller **111** may be configured to receive and process imaging data **102** generated by imaging system **110.**

Controller **111** may be implemented using hardware, software, or a combination of the two. In one illustrative example, controller **111** may be implemented using computer system **115**. Computer system **115** may be comprised of one or more computers, depending on the implementation.

Controller **111** may generate output **116**. Output **116** may take a number of different forms, depending on the implementation. In one illustrative example, output **116** may take the form of model **118**. Model **118** may be a three-dimensional model in this example. In other illustrative examples, output **116** may take the form of map **119**, point cloud **120**, or some other suitable form. Depending on the implementation, map **119** or point cloud **120** may be two-dimensional or three-dimensional.

Number of targets **112** may be removably attached to surface **104** of structure **106** using number of retaining members **113**. Number of targets **112** may be captured in imaging data **102** by imaging system **110**. Controller **111** may identify number of targets **112** in imaging data **102** and use the identification to generate output **116**.

As used herein, a "target," such as one of number of targets **112**, may be any object that can be captured by imaging system **110** in number of images **114** and is distinguishable from surface **104** of structure **106**. A target in number of targets **112** may also be referred to as a photogrammetric target.

Target **122** may be an example of a target in number of targets **112**. Target **122** may have first side **124** and second side **125**. In one illustrative example, code **126** may be visible on first side **124** of target **122**. In this example, first side **124** may be referred to as the coded side of target **122**. When target **122** has code **126**, target **122** may be referred to as a coded target.

Code **126** may take the form of any type of pattern that may distinguish target **122** from the other targets in number of targets **112.** In other words, code **126** may be an identifier for target **122**. Code **126** may take the form of, for example, without limitation, a pattern of shapes or markings visible on first side **124** of target **122**. In some cases, code **126** may be configured to be attached to target **122.** For example, without limitation, code **126** may take the form of one or more stickers that may be removably or permanently attached to a material to form a coded target.

In some illustrative examples, second side **125** of target **122** may be magnetic. When second side **125** of target **122** is magnetic, target **122** may be referred to as magnetic target **123**. In this illustrative example, magnetic target **123** may be a magnetic photogrammetric target. Of course, in other illustrative examples, second side **125** may be nonmagnetic.

In one illustrative example, both first side **124** and second side **125** of magnetic target **123** may be magnetic. In this example, code **126** may take the form of a number of magnets configured to be magnetically attached to first side **124** of target **122**. These magnets may take the form of magnetic stickers in some illustrative examples.

Number of retaining members **113** may be configured for use in removably attaching number of targets **112** to surface **104** of structure **106.** Retaining member **128** may be an example of a retaining member in number of retaining members **113.** Retaining member **128** may be used to hold one or more of number of targets **112**. In one illustrative example, retaining member **128** may be used to hold target **122**.

As depicted, retaining member **128** may have body **130**. In one illustrative example, body **130** may be flexible but dimensionally stable. Body **130** may be flexible in that body **130** may be capable of bending. However, body **130** may be dimensionally stable in that body **130** may be fixed in size with respect to the dimensions of body **130**. In other words, body **130** may be bendable but not stretchable or compressible.

Body **130** may have first side **132** and second side **134**. In one illustrative example, magnetic material **136** may be associated with first side **132** of body **130** and engagement material **138** may be associated with second side **134** of body **130.**

As used herein, when one component is "associated" with another component, the association is a physical association in the depicted examples. For example, a first component, such as magnetic material **136**, may be considered to be associated with a second component, such as body **130**, by being at least one of secured to the second component, bonded to the second component, mounted to the second component, welded to the second component, fastened to the second component, or connected to the second component in some other suitable manner. The first component also may be connected to the second component using a third component. Further, the first component may be considered to be associated with the second component by being formed as part of the second component, an extension of the second component, or both.

As used herein, the phrase "at least one of," when used with a list of items, means different combinations of one or more of the listed items may be used and only one of the items in the list may be needed. The item may be a particular object, thing, action, process, or category. In other words, "at least one of" means any combination of items or number of items may be used from the list, but not all of the items in the list may be required.

For example, "at least one of item A, item B, and item C" may mean item A; item A and item B; item B; item A, item B, and item C; or item B and item C. In some cases, "at least one of item A, item B, and item C" may mean, for example, without limitation, two of item A, one of item B, and ten of item C; four of item B and seven of item C; or some other suitable combination.

In this manner, magnetic material **136** may form a portion of body **130** at first side **132** of body **130** or be connected to first side **132** of body **130**. In one illustrative example, magnetic material **136** may take the form of magnetic paint **141** that is painted on first side **132** of body **130**.

Magnetic material **136** may be used to hold magnetic target **123** in fixed position **140** relative to retaining member **128**. In particular, magnetic material **136** may exert an attractive force on magnetic target **123**. This attractive force may be sufficiently strong to hold magnetic target **123** when retaining member **128** is in different orientations. In particular, the attractive force may be sufficiently strong such that retaining member **128** is capable of holding magnetic target **123** absent any external forces.

Engagement material **138** may be used to removably attach retaining member **128** to surface **104** of structure **106.** Engagement material **138** may take a number of different forms. Engagement material **138** may take the form of adhesive material **142,** vinyl film **144,** static cling material **146,** some other type of material, or some combination thereof.

Adhesive material **142** and vinyl film **144** may have a number of properties selected such that adhesive material **142,** and thereby retaining member **128,** can be removed from surface **104** without having an undesired effect on surface **104** or structure **106.** Static cling material **146** may be configured to cling to surface **104** of structure **106** using static electricity.

In one illustrative example, a combination of static cling material **146** and adhesive material **142** may be used. For example, without limitation, static cling material **146** may be used to removably attach body **130** to surface **104,** but adhesive material **142** may be used to removably attach magnetic target **123** to body **130.**

In one illustrative example, engagement material **138** may be used to first removably attach retaining member **128** to surface **104.** Then, magnetic target **123** may be positioned relative to magnetic material **136.** Magnetic material **136** may attract and hold magnetic target **123.** Thus, magnetic target **123** may be removably attached to surface **104** without directly adhering magnetic target **123** to surface **104.**

In other illustrative examples, first side **132** of retaining member **128** may take the form of non-adhesive side **148** and second side **134** of retaining member **128** may take the form of adhesive side **150.** Code **126** may be visible at non-adhesive side **148.** Adhesive side **150** may be used to removably attach retaining member **128** to surface **104**.

In these examples, retaining member **128** may have set of stabilizing features **152** configured to hold target **122**. Set of stabilizing features **152** may be unitary with body **130** of retaining member **128** in some cases. As used herein, a first object being "unitary" with a second object means that the first object and the second object are part of the same unit. For example, without limitation, the first object may form a portion of the second object. The portion of body **130** that forms set of stabilizing features **152** may be referred to as a stabilizing portion of body **130**. In other illustrative examples, body **130** may have a number of stabilizing portions.

Set of stabilizing features **152** may be used to hold target **122** in fixed position **140** relative to retaining member **128**. Set of stabilizing features **152** may hold target **122** in fixed position **140** relative to retaining member **128** such that target **122** may be removably attached to surface **104** when adhesive side **150** of retaining member **128** is used to removably attach retaining member **128** to surface **104**. Thus, target **122** may be removably attached to surface **104** without directly adhering target **122** to surface **104**.

Depending on the implementation, retaining member **128** may include multiples sets of stabilizing features such that multiple targets may be held by retaining member **128**. These multiple sets of stabilizing features may be arranged such that targets may be held in fixed positions relative to retaining member **128** according to some predefined pattern or predefined spacing requirements.

Depending on the implementation, retaining member **128** may be implemented as sticker **156**, decal **158,** strip of tape **160,** or some other type of object. Further, retaining member **128** may have shape **154**. In particular, body **130** of retaining member **128** may have shape **154**. Shape **154** may be selected from one of a square shape, a rectangular shape, a circular shape, an oval shape, a triangular shape, a cross-shape, an irregular shape, or some other type of shape.

Number of targets **112** may be removed from number of retaining members **113** without causing any undesired effects to number of targets **112**, number of retaining members **113**, or both. In this manner, number of targets **112** may be reusable or disposable, depending on the implementation.

For example, without limitation, magnetic target **123** may be removed from retaining member **128** and attached to a new retaining member at some later point in time. In particular, magnetic target **123** that has been removed from retaining member **128** may be positioned relative to a new retaining member and then later removably attached to another surface of a different structure using the new retaining member. In some cases, once magnetic target **123** is removed from retaining member **128**, a new magnetic target may be removably attached to retaining member **128**. The new magnetic target may have a different code than code **126**, for example.

Further, in some illustrative examples, number of retaining members **113** may be reusable. In other illustrative examples, number of retaining members **113** may be disposable.

The illustration of photogrammetric environment **100** in **Figure 1** is not meant to imply physical or architectural limitations to the manner in which an illustrative embodiment may be implemented. Other components in addition to or in place of the ones illustrated may be used. Some components may be optional. Also, the blocks are presented to illustrate some functional components. One or more of these blocks may be combined, divided, or combined and divided into different blocks when implemented in an illustrative embodiment.

For example, although retaining member **128** is described as being configured to hold target **122**, retaining member **128** may be configured to hold other targets in number of targets **112** in addition to or in place of target **122**. In some illustrative examples, target **122** may not have code **126** at first side **124** of target **122**. In other illustrative examples, number of targets **112** may be removably attached to the surface of more than one structure.

In one illustrative example, body **130** may be implemented in a manner differently than described above. For example, without limitation, body **130** may be comprised of a first portion and a second portion. The first portion may have a first inner surface and a first outer surface. The first outer surface may be located at first side **132** of body **130**. The first portion of body **130** may be comprised of magnetic material **136**. In this example, the second portion may have a second inner surface that contacts the first inner surface of the first portion of body **130** and a second outer surface that is located at second side **134** of body **130.** Engagement material **138** may form a coating on the second outer surface of the second portion. The second portion of body **130** may be comprised of a material selected from one of a plastic material, a metal material, and a composite material.

In other illustrative examples, set of stabilizing features **152** may not be unitary with body **130**. Instead, set of stabilizing features **152** may be associated with both body **130** and one of number of targets **112**, such as target **122**. For example, without limitation, set of stabilizing features **152** may take the form of set of hook-and-loop fasteners **162**, set of snap fasteners **164**, or a set of some other type stabilizing feature.

Set of hook-and-loop fasteners **162** may be comprised of a set of hooked strips associated with first side **132** of body **130** and a set of looped strips associated with second side **125** of target **122**. Each of the set of hooked strips may be a fabric having hooks configured to a looped strip. Each of the set of looped strips may be a fabric having loops configured to engage a hooked strip. The set of looped strips may be engaged with the set of hooked strips to removably attach target **122** to retaining member **128**.

Set of stabilizing features **152** may take the form of set of snap fasteners **164**. Set of snap fasteners **164** may be comprised of a set of first discs and a set of second discs. A first disc in the set of first discs and a corresponding second disc in the set of second discs may form a pair of interlocking discs. For example, each of the set of first discs may be associated with first side **132** of body **130** and each of the set of second discs may be associated with second side **125** of target **122**. The set of second discs may interlock with the set of first discs to removably attach target **122** to retaining member **128**.

In one illustrative example, body **130** may be comprised of a fabric material to which the set of first discs are attached. In this example, the set of second discs may be attached to a fabric associated with target **122**.

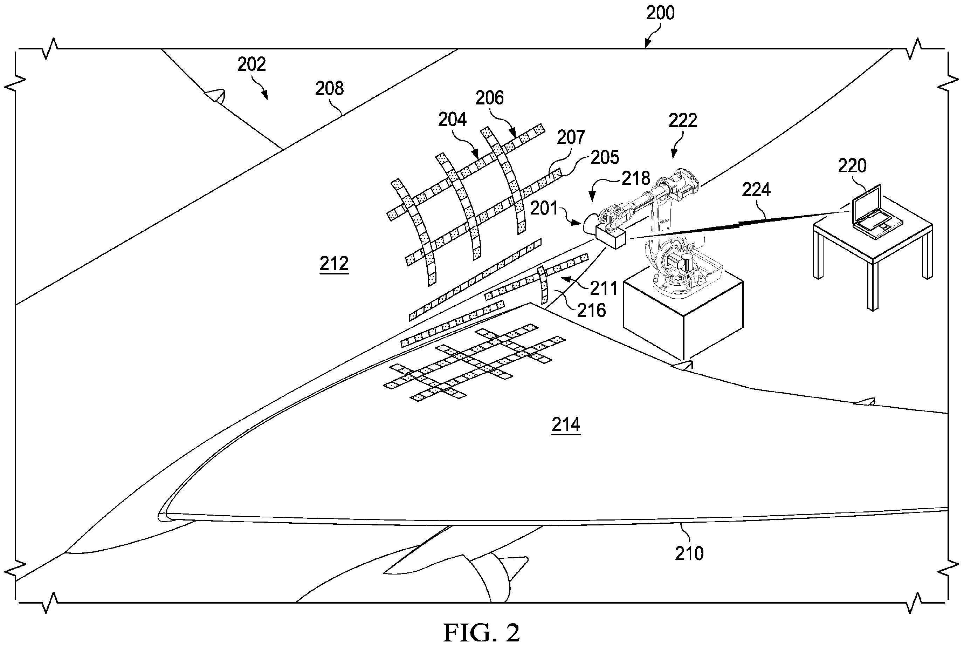

With reference now to **Figure 2****,** an illustration of an isometric view of a photogrammetric environment is depicted in accordance with an illustrative embodiment. In this illustrative example, photogrammetric environment **200** is an example of one implementation for photogrammetric environment **100** shown in block form in **Figure 1****.**

As depicted, photogrammetric environment **200** includes photogrammetry system **201** and aircraft **202**. Photogrammetry system **201** may be an example of one implementation for photogrammetry system **108** in **Figure 1****.** In this illustrative example, photogrammetry system **201** includes number of magnetic targets **204** and number of retaining members **206**. Number of magnetic targets **204** and number of retaining members **206** may be an example of one implementation for number of targets **112** and number of retaining members **113**, respectively, in **Figure 1****.**

Magnetic target **205** may be an example of one of number of magnetic targets **204**. Magnetic target **205** may be removably attached to aircraft **202** by retaining member **207**. Retaining member **207** may be an example of one of number of retaining members **206**. Magnetic target **205** and retaining member **207** may be examples of implementations for magnetic target **123** and retaining member **128**, respectively, in **Figure 1****.**

In this illustrative example, number of retaining members **206** may be used to removably attach number of magnetic targets **204** to fuselage **208**, wing **210**, and interface **211** between wing **210** and fuselage **208**. Fuselage **208**, wing **210**, and interface **211** may each be an example of one implementation for structure **106** in **Figure 1****.** Interface **211** may be referred to as a fillet panel or a wing-to-fuselage panel in some illustrative examples. At least one of fuselage **208,** wing **210,** or interface **211** may be at least partially fabricated using one or more composite materials.

Number of retaining members **206** may be used to removably attach number of magnetic targets **204** to surface **212** of fuselage **208**, surface **214** of wing **210**, and surface **216** of interface **211**. Each of surface **212, 214,** and **216** may be an example of one implementation for surface **104** in **Figure 1****.**

Photogrammetry system **201** may also include imaging system **218** and controller **220.** Imaging system **218** may be associated with robotic device **222.** Robotic device **222** may be configured to control operation and movement of imaging system **218** within photogrammetric environment **200.** Imaging system **218** may be used to generate imaging data of aircraft **202** with number of magnetic targets **204** removably attached to aircraft **202.** This imaging data may be sent to controller **220** over wireless communications link **224.** Controller **220** may use the imaging data to generate an output, such as output **116** in **Figure 1****.**

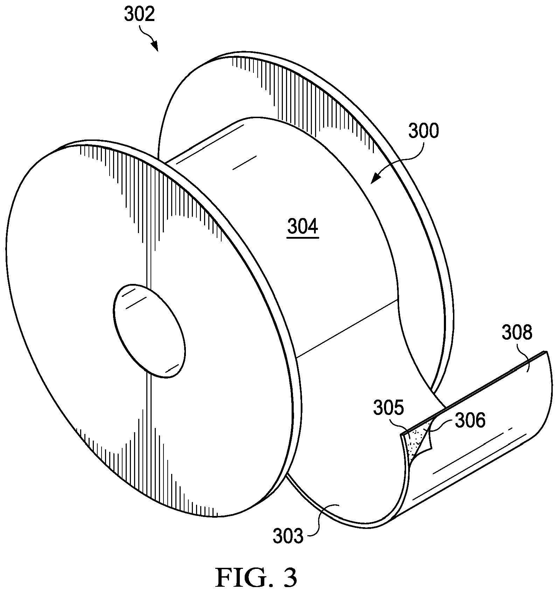

With reference now to **Figure 3****,** an illustration of a spool of retaining tape is depicted in accordance with an illustrative embodiment. In this illustrative example, retaining tape **300** may be wrapped around spool **302.** Retaining tape **300** may be used to form number of retaining members **206** in **Figure 2****.** For example, without limitation, a strip of retaining tape **300** may be cut away to form each of number of retaining members **206.**

Retaining tape **300** may have first side **303** and second side **305.** First side **303** and second side **305** may be examples of first side **132** and second side **134**, respectively, in **Figure 1****.** In this illustrative example, magnetic material **304** may be located on first side **303** of retaining tape **300** and engagement material **306** may be located on second side **305** of retaining tape **300.** Magnetic material **304** and engagement material **306** may be examples of magnetic material **136** and engagement material **138**, respectively, in **Figure 1****.**

In this illustrative example, paper **308** may be removably attached to second side **305** of retaining tape **300** to protect engagement material **306** until use. For example, without limitation, a strip of retaining tape **300** may be cut away to form retaining member **207** in **Figure 2****.** Paper **308** may then be removed from second side **305** when the retaining member is ready to be removably attached to surface **212** of fuselage **208** in **Figure 2****.**

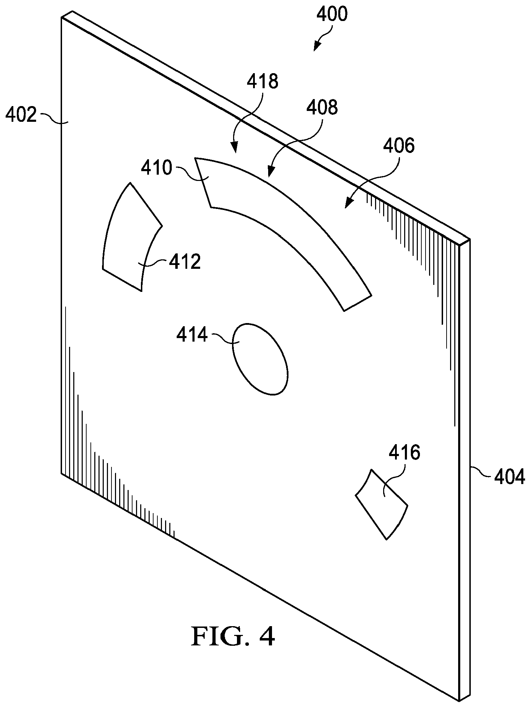

With reference now to **Figure 4**, an illustration of a magnetic target is depicted in accordance with an illustrative embodiment. In this illustrative example, magnetic target **400** may be an example of one implementation for magnetic target **123** in **Figure 1****.** Further, magnetic target **400** may be an example of one of number of magnetic targets **204** in **Figure 2****.**

As depicted, magnetic target **400** may have first side **402** and second side **404**. First side **402** and second side **404** may be examples of implementations for first side **132** and second side **134**, respectively, in **Figure 1****.** At least second side **404** of magnetic target **400** may be magnetic.

In this illustrative example, code **406** is visible on first side **402.** Magnetic target **400** may be referred to as a coded target or a coded magnetic target in some cases. Code **406** may be an example of one implementation for code **126** in **Figure 1****.** Code **406** may be formed by plurality of shapes **408.** Plurality of shapes **408** may include shapes **410**, **412**, **414,** and **416.** As depicted, plurality of shapes **408** form pattern **418** on first side **402.** Pattern **418** may be unique to magnetic target **400.** Thus, code **406** may allow magnetic target **400** to be distinguishable from other magnetic targets in number of magnetic targets **204.**

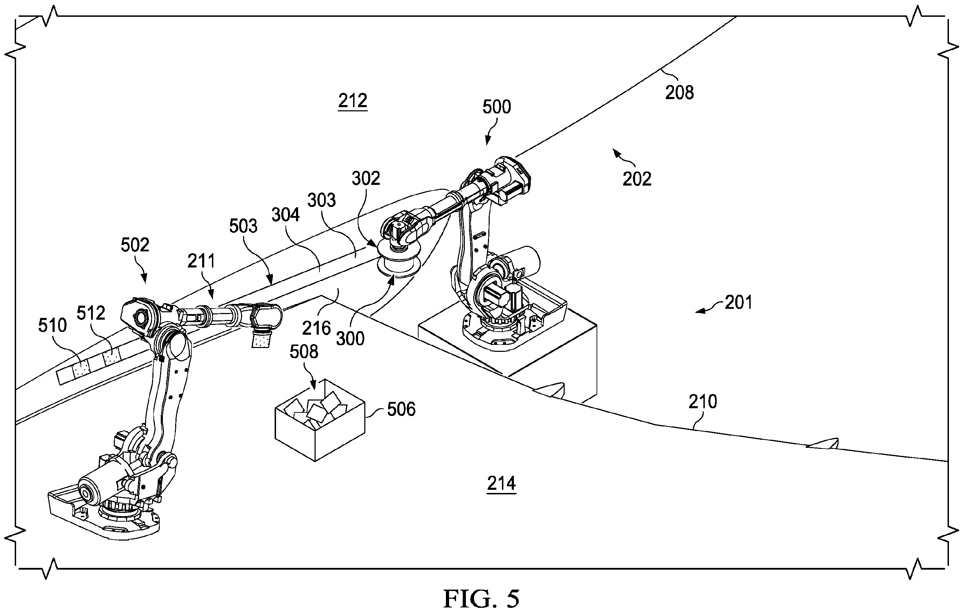

With reference now to **Figure 5**, an illustration of magnetic targets being removably attached to surface **212** of fuselage **208** of aircraft **202** from **Figure 2** is depicted in accordance with an illustrative embodiment. Robotic device **500** and robotic device **502** may be positioned relative to aircraft **202**.

In this illustrative example, robotic device **500** may be configured to hold spool **302** of retaining tape **300** from **Figure 3****.** Further, robotic device **500** may be used to removably attach retaining tape **300** to interface **211**. Robotic device **500** may roll portion **503** of retaining tape **300** onto surface **216** of interface **211** and use engagement material **306** seen in **Figure 3** to removably attach portion **503** of retaining tape **300** onto surface **216**.

In some cases, robotic device **500** may have an end effector device (not shown) capable of cutting retaining tape **300** to separate portion **503** from the rest of retaining tape **300** wrapped around spool **302**. In this manner, portion **503** of retaining tape **300** may form a strip of retaining tape **300.**

In this illustrative example, robotic device **502** may be used to removably attach at least a portion of magnetic targets **508** in box **506** onto aircraft **202**. For example, without limitation, robotic device **502** may removably attach magnetic target **510** and magnetic target **512** onto first side **303** of portion **503** of retaining tape **300** to removably attach magnetic target **510** and magnetic target **512** to surface **216**.

Robotic device **502** may position magnetic target **510** and magnetic target **512** relative to portion **503** of retaining tape **300**. Magnetic material **304** on first side **303** of portion **503** of retaining tape **300** may attract and hold magnetic target **510** and magnetic target **512** in fixed positions relative to portion **503** of retaining tape **300**.

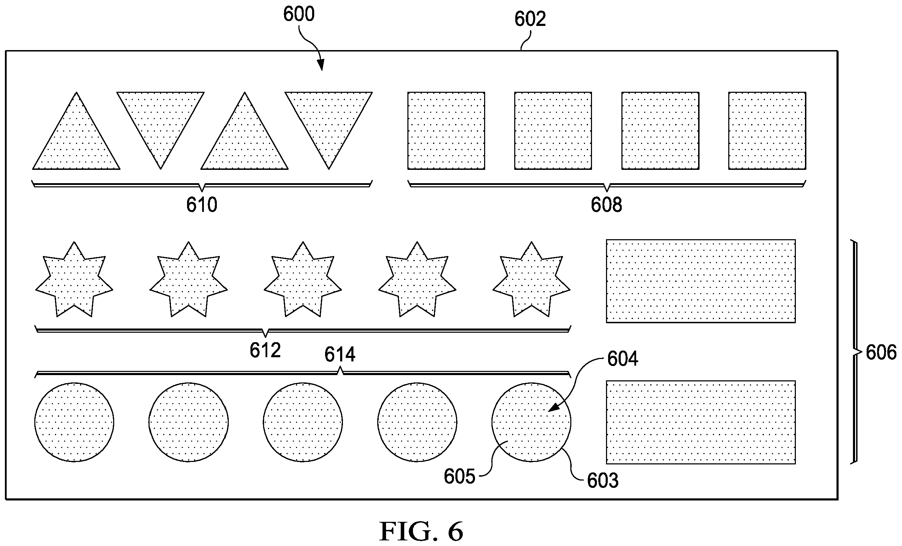

With reference now to **Figure 6**, an illustration of a plurality of stickers is depicted in accordance with an illustrative example not falling within the scope of the appended claims. In this illustrative example, plurality of stickers **600** may be removably attached to backing **602**. Each of plurality of stickers **600** may be an example of one implementation for retaining member **128** in

### Figure 1.

A sticker in plurality of stickers **600** may be used to removably attach a magnetic target, such as magnetic target **400** in **Figure 4**, to a surface, such as one of surfaces **212**, **214,** and **216** in **Figure 2****.** Sticker **603** may be an example of one of plurality of stickers **600.** Sticker **603** may have magnetic material **604** located on first side **605** of sticker **603.** An engagement material (not shown) may be located on the second side (not shown in this view) of sticker **603** that is in contact with backing **602.**

As depicted, plurality of stickers **600** may include first type of stickers **606**, second type of stickers **608**, third type of stickers **610**, fourth type of stickers **612**, and fifth type of stickers **614**. Each of these types of stickers may have a different shape. The selection of a sticker from plurality of stickers **600** may be made based on the shape, size, or both of the magnetic target configured to be removably attached to the sticker.

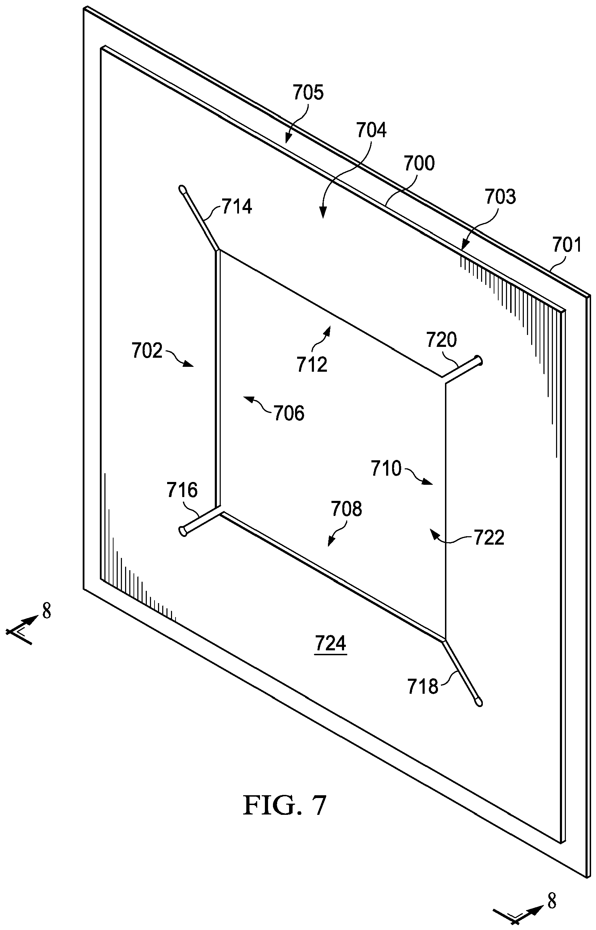

With reference now to **Figure 7**, an illustration of an isometric view of a retaining member is depicted in accordance with an illustrative embodiment. In this illustrative example, retaining member **700** may be an example of one implementation for retaining member **128** in **Figure 1****.** As depicted, retaining member **700** may be associated with backing **701.**

As depicted, retaining member **700** may have cutout portion **702** within body **703** of retaining member **700.** Further, retaining member **700** may have set of stabilizing features **704** formed around cutout portion **702.** Set of stabilizing features **704** may include stabilizing features **706, 708, 710,** and **712.**

Together, set of stabilizing features **704** form stabilizing portion **722** configured to hold a target (not shown), such as target **122** in **Figure 1****,** in a fixed position relative to retaining member **700.** Each of set of stabilizing features **704** may take the form of a tab. As depicted, set of stabilizing features **704** may be unitary with body **703.** Body **703** has square shape **705** in this illustrative example.

Slit **714** and slit **716** in retaining member **700** around cutout portion **702** may form stabilizing feature **706**. Slit **716** and slit **718** in retaining member **700** around cutout portion **702** may form stabilizing feature **708**. Slit **718** and slit **720** in retaining member **700** around cutout portion **702** may form stabilizing feature **710.** Further, slit **720** and slit **714** in retaining member **700** around cutout portion **702** may form stabilizing feature **712**.

Body **703** may have non-adhesive side **724** and an adhesive side (not shown) in this view. The adhesive side may be in contact with backing **701**. Thus, retaining member **700** may take the form of a sticker removably attached to backing **701** until retaining member **700** is ready to be used.

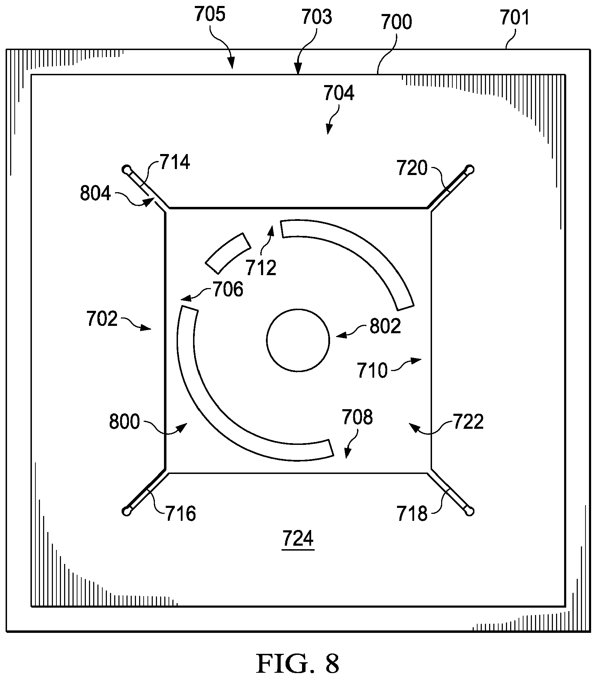

With reference now to **Figure 8**, an illustration of a front view of retaining member **700** from **Figure 7** holding a coded target is depicted in accordance with an illustrative embodiment. In this illustrative example, a front view of retaining member **700** from **Figure 7** may be depicted in the direction of lines **8-8** in **Figure 7****.**

As depicted, retaining member **700** may be holding coded target **800** having code **802** visible at non-adhesive side **724** of retaining member **700**. Coded target **800** may be an example of one implementation for target **122** in **Figure 1****.** In one illustrative example, coded target **800** may be a magnetic target.

Set of stabilizing features **704** may have been peeled away from cutout portion **702** to allow coded target **800** to be positioned relative to cutout portion **702**. Set of stabilizing features **704** may then be removably attached to edges **804** of coded target **800**. In particular, the adhesive side (not shown) of set of stabilizing features **704** may be used to removably attach set of stabilizing features **704** to edges **804** of coded target **800**.

Retaining member **700** with coded target **800** may then be peeled away from backing **701** and removably attached to a surface of a structure, such as one of surfaces **212**, **214**, and **216** in **Figure 2****.** In this manner, coded target **800** may be indirectly removably attached to the surface using retaining member **700**.

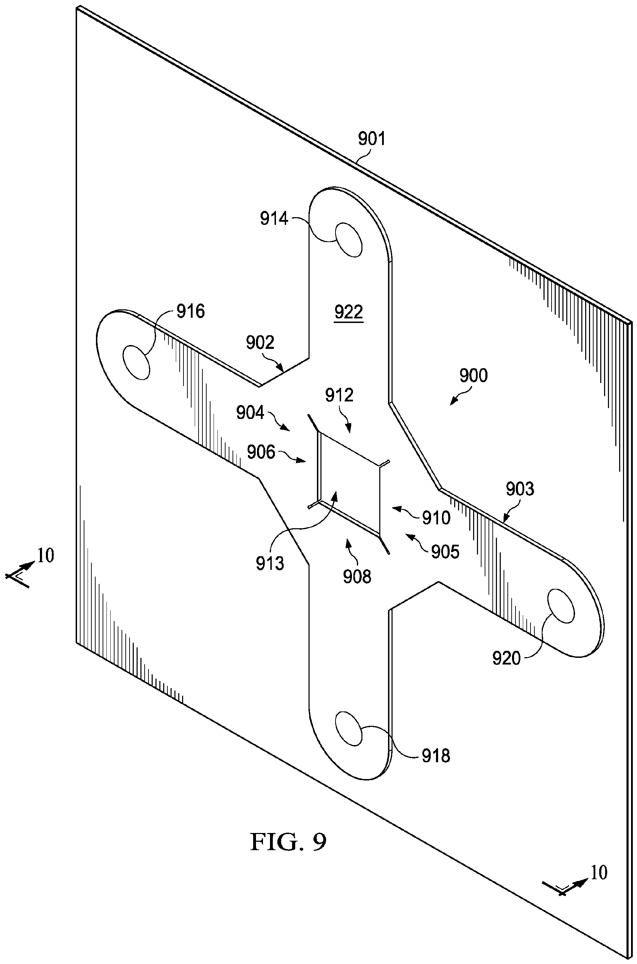

With reference now to **Figure 9**, an illustration of an isometric view of a retaining member is depicted in accordance with an illustrative example not falling within the scope of the appended claims. In this illustrative example, retaining member **900** may be an example of one implementation for retaining member **128** in **Figure 1****.**

As depicted, retaining member **900** may be associated with backing **901** in this illustrative example. Retaining member **900** may take the form of a sticker removably attached to backing **901** until retaining member **900** is ready to be used. Retaining member **900** may be implemented in a manner similar to retaining member **700** in **Figures 7-8****.** However, retaining member **900** may have body **902** with cross shape **903**.

In this illustrative example, retaining member **900** may have cutout portion **904** with set of stabilizing features **905** formed around cutout portion **904**. Set of stabilizing features **905** may be unitary with body **902** and may form stabilizing portion **913** of body **902**. Set of stabilizing features **905** may include stabilizing features **906**, **908**, **910**, and **912.** Set of stabilizing features **905** may be configured for use in holding a target, such as target **122** in **Figure 1****,** in a fixed position relative to retaining member **900.**

Locations **914, 916, 918,** and **920** may be used to associate a different type of target (not shown) with retaining member **900**. This target may take the form of, for example, without limitation, a sticker configured to be removably adhered to non-adhesive side **922** of body **902** of retaining member **900**. Body **902** may have an adhesive side (not shown in this view) in contact with backing **901**.

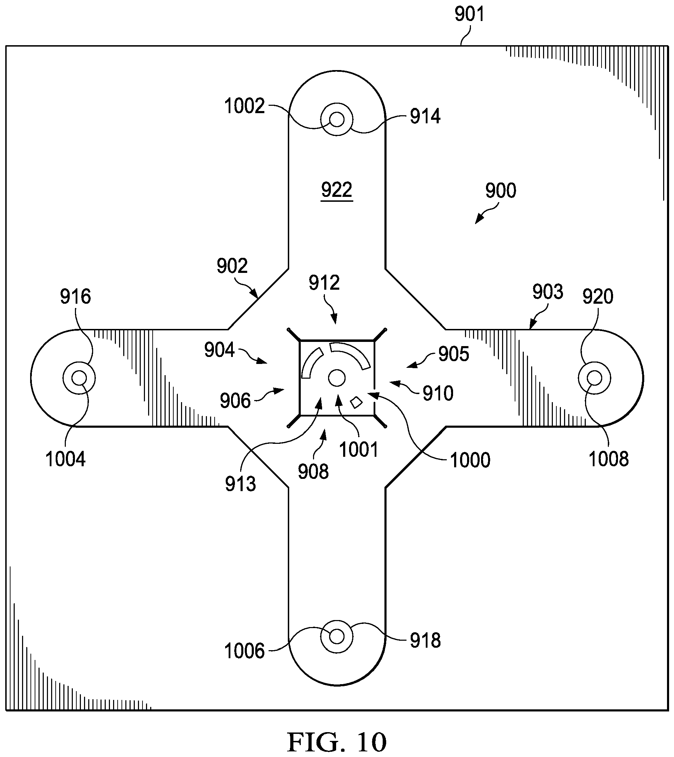

With reference now to **Figure 10****,** an illustration of a front view of retaining member **900** from **Figure 9** holding a target is depicted in accordance with an illustrative embodiment. In this illustrative example, a front view of retaining member **900** from **Figure 9** is depicted taken in the direction of lines **10-10** in **Figure 9****.**

As depicted, set of stabilizing features **905** may be used to hold coded target **1000.** Coded target **1000** may be an example of one implementation for target **122** in **Figure 1****.** Coded target **1000** may have code **1001** visible at non-adhesive side **922** of body **902** of retaining member **900**.

Further, targets **1002, 1004, 1006,** and **1008** may also be removably attached to non-adhesive side **922** of body **902.** Targets **1002, 1004, 1006,** and **1008** may not be coded targets. Thus, targets **1002, 1004, 1006,** and **1008** may not be unique or distinguishable from each other.

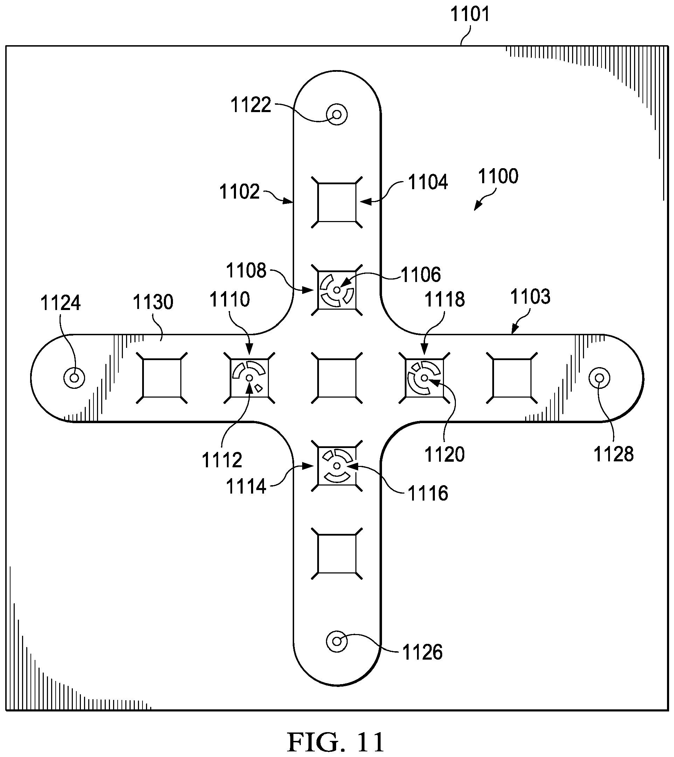

With reference now to **Figure 11****,** an illustration of a front view of a different type of retaining member is depicted in accordance with an illustrative example not falling within the scope of the appended claims. In this illustrative example, retaining member **1100** may be an example of yet another implementation for retaining member **128** in **Figure 1****.** In this illustrative example, retaining member **1100** may be implemented in a manner similar to retaining member **900** in **Figure 9****.**

However, retaining member **1100** may be configured to hold multiple coded targets. In particular, retaining member **1100** may have body **1102** with cross shape **1103.** Body **1102** may have an adhesive side (not shown in this view) in contact with backing **1101.**

Plurality of sets of stabilizing features **1104** may be distributed along cross shape **1103** of body **1102.** Each set of stabilizing features in plurality of sets of stabilizing features **1104** may be configured for use in holding a coded target (not shown).

As depicted, retaining member **1100** may be used to hold coded target **1106** having code **1108,** coded target **1110** having code **1112,** coded target **1114** having code **1116,** and coded target **1118** having code **1120.** Codes **1108, 1112, 1116,** and **1120** allow coded targets **1106, 1110, 1114,** and **1118,** respectively, to be distinguished from each other.

In this illustrative example, targets **1122, 1124, 1126,** and **1128** may also be removably attached to non-adhesive side **1130** of body **1102.** Targets **1122, 1124, 1126,** and **1128** are not coded targets in this illustrative example.

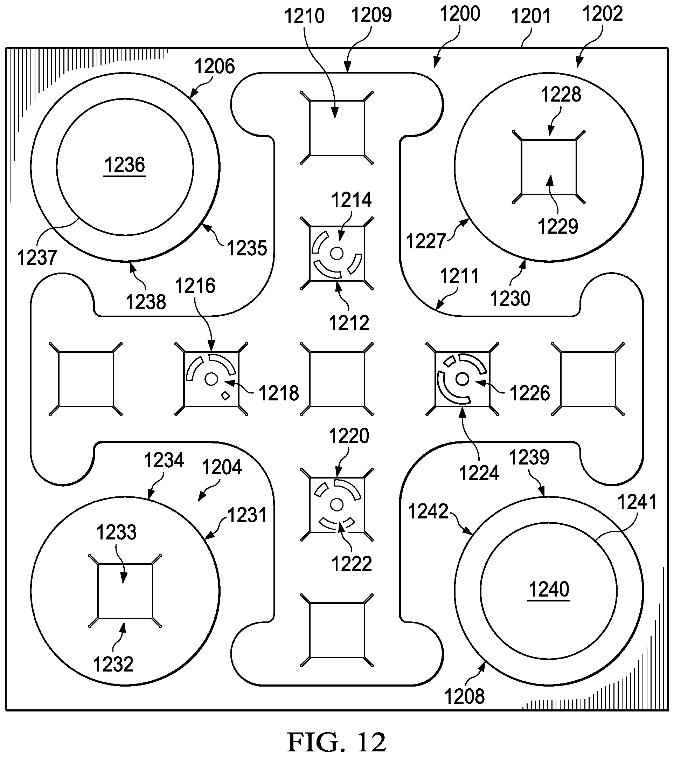

With reference now to **Figure 12****,** an illustration of a front view of different types of retaining members is depicted in accordance with an illustrative example not falling within the scope of the appended claims. In **Figure 12****,** an example of combining different examples to maximize material usage is depicted. In particular, different types of retaining members are formed on backing **1201.**

In this illustrative example, retaining members **1200, 1202, 1204, 1206,** and **1208** may be removably attached to backing **1201.** Retaining members **1200, 1202, 1204, 1206,** and **1208** may take the form of stickers.

Retaining member **1200** may have body **1209** with cross shape **1211.** Cross shape **1211** may be different from cross shape **903** in **Figures 9-10** and cross shape **1103** in **Figure 11****.** Body **1209** may have plurality of sets of stabilizing features **1210** unitary with body **1209.** In this illustrative example, plurality of sets of stabilizing features **1210** may be used to hold coded target **1212** having code **1214,** coded target **1216** having code **1218,** coded target **1220** having code **1222,** and coded target **1224** having code **1226.**

Retaining member **1202** may have body **1227** with set of stabilizing features **1228** located around cutout portion **1229** of body **1227.** Body **1227** may have circular shape **1230.** Retaining member **1204** may have body **1231** with set of stabilizing features **1232** located around cutout portion **1233** of body **1231.** Body **1231** may have circular shape **1234.**

In this illustrative example, retaining member **1206** may have body **1235.** Magnetic paint **1236** may be associated with portion **1237** of body **1235.** Magnetic paint **1236** may be used to attract and hold a magnetic target (not shown), such as magnetic target **400** in **Figure 4****.** Body **1235** may have circular shape **1238.**

Similarly, retaining member **1208** may have body **1239.** Magnetic paint **1240** may be associated with portion **1241** of body **1239.** Magnetic paint **1240** may be used to attract and hold a magnetic target (not shown), such as magnetic target **400** in **Figure 4****.** Body **1239** may have circular shape **1242.**

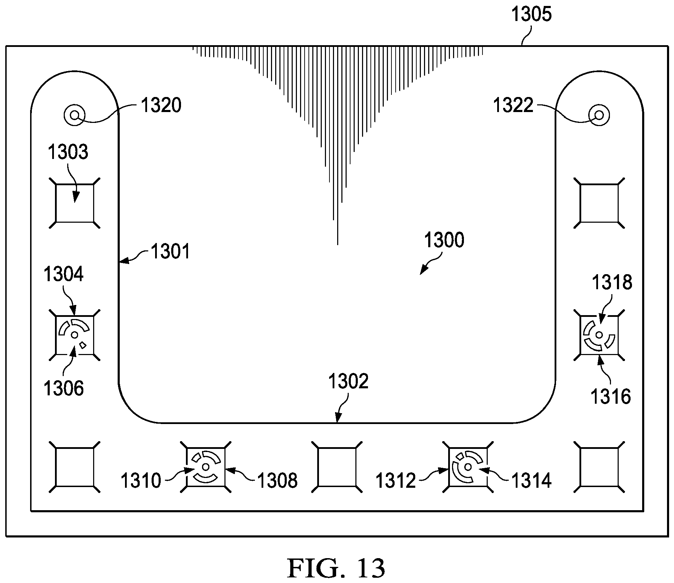

With reference now to **Figure 13****,** an illustration of a front view of another type of retaining member is depicted in accordance with an illustrative example not falling within the scope of the appended claims. In this illustrative example, retaining member **1300** may be an example of one implementation for retaining member **128** in **Figure 1****.** As depicted, retaining member **1300** may have body **1301** with U-shape **1302.** Body **1301** may have an adhesive side (not shown in this view) in contact with backing **1305.**

Retaining member **1300** may have plurality of sets of stabilizing features **1303.** In this illustrative example, plurality of sets of stabilizing features **1303** may be used to hold coded target **1304** having code **1306,** coded target **1308** having code **1310,** coded target **1312** having code **1314,** and coded target **1316** having code **1318.**

In this illustrative example, target **1320** and target **1322** may also be removably attached to body **1301.** Target **1320** and target **1322** are not coded targets in this illustrative example.

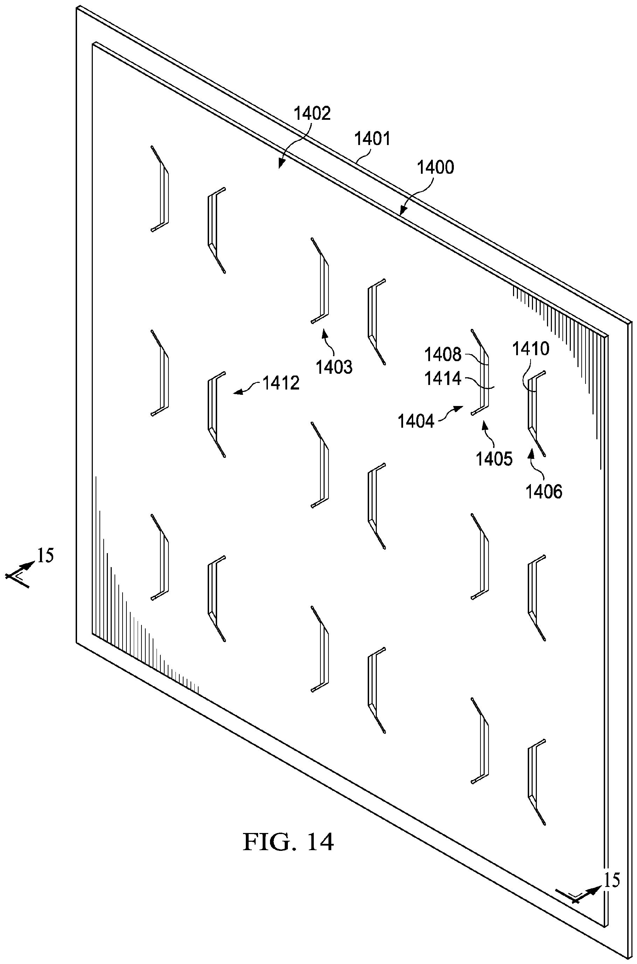

With reference now to **Figure 14****,** an illustration of an isometric view of a retaining member is depicted in accordance with an illustrative embodiment. Retaining member **1400** may be another example of one implementation for retaining member **128** in **Figure 1****.** Retaining member **1400** may be associated with backing **1401.**

In this illustrative example, retaining member **1400** may have body **1402** with plurality of sets of stabilizing features **1403.** Set of stabilizing features **1404** may be an example of one of plurality of sets of stabilizing features **1403.** As depicted, set of stabilizing features **1404** may include stabilizing feature **1405** and stabilizing feature **1406.** Stabilizing feature **1405** and stabilizing feature **1406** may be formed by opening **1408** and opening **1410,** respectively, in body **1402.** Plurality of openings **1412** in body **1402** may form plurality of sets of stabilizing features **1403.**

As depicted, supporting portion **1414** may be formed between stabilizing feature **1405** and stabilizing feature **1406.** Supporting portion **1414** may be used to support a target (not shown) secured by set of stabilizing features **1403.**

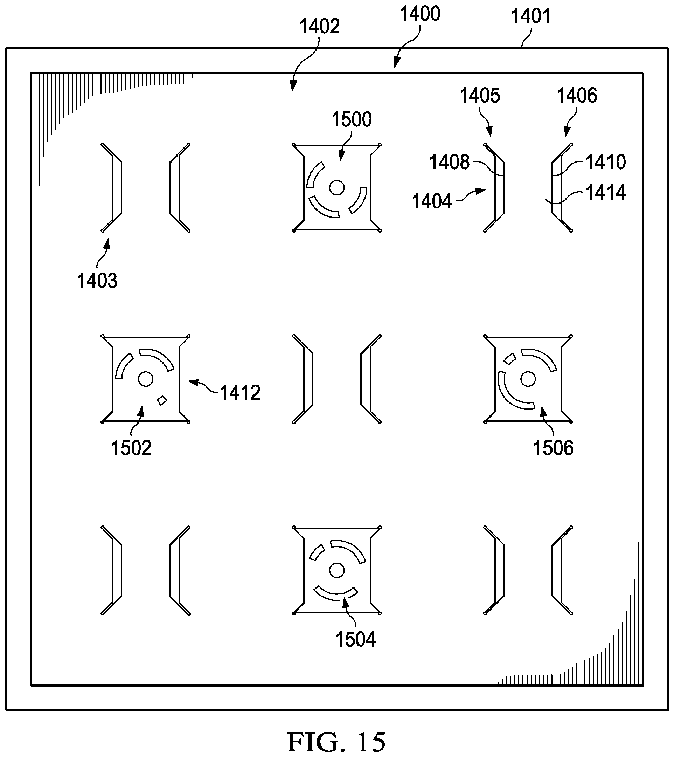

With reference now to **Figure 15****,** an illustration of a front view of retaining member **1400** from **Figure 14** is depicted in accordance with an illustrative embodiment. In this illustrative example, a front view of retaining member **1400** from **Figure 14** is depicted taken in the direction of lines **15-15** in **Figure 14****.** As depicted, retaining member **1400** may be used to hold coded targets **1500, 1502, 1504,** and **1506.**

The illustrations of photogrammetric environment **200** in **Figure 2****,** retaining tape **300** in **Figure 3****,** magnetic target **400** in **Figure 4****,** robotic device **500** and robotic device **502** in **Figure 5****,** plurality of stickers **600** in **Figure 6****,** retaining member **700** in **Figures 7-8****,** retaining member **900** in **Figures 9-10****,** retaining member **1100** in **Figure 11****,** retaining member **1200** in **Figure 12****,** retaining member **1300** in **Figure 13****,** and retaining member **1400** in **Figures 14-15** are not meant to imply physical or architectural limitations to the manner in which an illustrative embodiment may be implemented. Other components in addition to or in place of the ones illustrated may be used. Some components may be optional.

The different components shown in **Figures 2-15** may be illustrative examples of how components shown in block form in **Figure 1** can be implemented as physical structures. Additionally, some of the components in **Figures 2-15** may be combined with components in **Figure 1****,** used with components in **Figure 1****,** or a combination of the two.

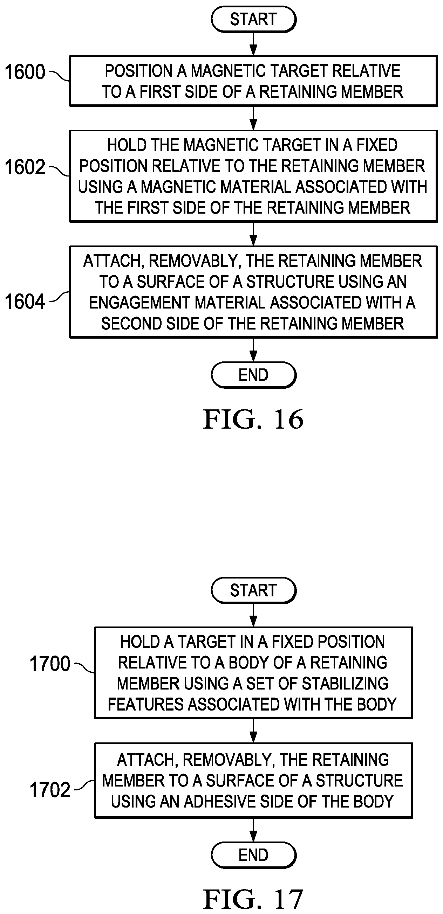

With reference now to **Figure 16****,** an illustration of a process for removably attaching a magnetic target for a photogrammetry system to a surface of a structure is depicted in the form of a flowchart in accordance with an illustrative embodiment. The process illustrated in **Figure 16** may be implemented to removably attach magnetic target **123** for photogrammetry system **108** to surface **104** of structure **106** in **Figure 1****.**

The process may begin by positioning magnetic target **123** relative to first side **132** of retaining member **128** (operation **1600**). Next, magnetic target **123** may be held in fixed position **140** relative to retaining member **128** using magnetic material **136** associated with first side **132** of retaining member **128** (operation **1602**). Thereafter, retaining member **128** may be removably attached to surface **104** of structure **106** using engagement material **138** associated with second side **134** of retaining member **128** (operation **1604**), with the process terminating thereafter.

With reference now to **Figure 17****,** an illustration of a process for removably attaching a target for a photogrammetry system to a surface of a structure is depicted in the form of a flowchart in accordance with an illustrative embodiment. The process illustrated in **Figure 17** may be implemented to removably attach target **122** for photogrammetry system **108** to surface **104** of structure **106** in **Figure 1****.**

The process may begin by holding target **122** in fixed position **140** relative to body **130** of retaining member **128** using set of stabilizing features **152** associated with body **130** (operation **1700**). Retaining member **128** may then be removably attached to surface **104** of structure **106** using adhesive side **150** of body **130** (operation **1702**), with the process terminating thereafter.

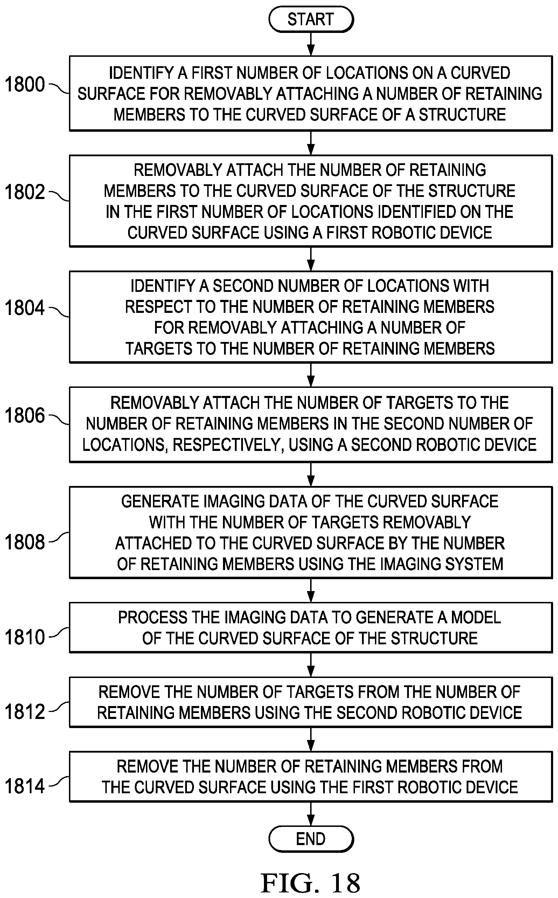

With reference now to **Figure 18****,** an illustration of a process for using photogrammetry to generate a three-dimensional model of a structure is depicted in the form of a flowchart in accordance with an illustrative embodiment. The process illustrated in **Figure 18** may be used to removably attach, for example, without limitation, number of targets **112** to curved surface **105** of structure **106** using number of retaining members **113** in **Figure 1****.**

Structure **106** may take the form of an aircraft structure such as, for example, without limitation, a fuselage, a wing, a curved interface between the fuselage and wing of an aircraft, a tail, or some other type of aircraft structure. Of course, in other illustrative examples, structure **106** may take some other form.

The process may begin by identifying a first number of locations on curved surface **105** for removably attaching number of retaining members **113** to curved surface **105** of structure **106** (operation **1800).** In operation **1800,** the number of locations for number of retaining members **113** may be identified using, for example, without limitation, a computer-aided design (CAD) model of structure **106.** Next, number of retaining members **113** may be removably attached to curved surface **105** of structure **106** in the first number of locations identified on curved surface **105** using a first robotic device (operation **1802**).

Thereafter, a second number of locations with respect to number of retaining members **113** may be identified for removably attaching number of targets **112** to number of retaining members **113** (operation **1804**). Number of targets **112** may then be removably attached to number of retaining members **113** in the second number of locations, respectively, using a second robotic device (operation **1806**).

Imaging data **102** of curved surface **105** with number of targets **112** removably attached to curved surface **105** by number of retaining members **113** may be generated using imaging system **110** (operation **1808**). Imaging data **102** may be processed to generate model **118** of curved surface **105** of structure **106** (operation **1810**). In operation **1810,** model **118** may be a three-dimensional model.

Next, number of targets **112** may be removed from number of retaining members **113** using the second robotic device (operation **1812**). Number of targets **112** may be reusable for performing photogrammetry at a later point in time and/or on a different structure. Then, number of retaining members **113** may be removed from curved surface **105** using the first robotic device (operation **1814**), with the process terminating thereafter. In some illustrative examples, number of retaining members **113** may be reusable. In other illustrative examples, number of retaining members **113** may be disposable.

Although some of the operations in **Figure 18** are described as being performed by a first robotic device and a second robotic device, one or more of these operations may be performed by a human operator in other illustrative examples. For example, without limitation, the removal of number of retaining members **113** from curved surface **105** in operation **1814** may be performed by a human operator.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent a module, a segment, a function, a portion of an operation or step, some combination thereof.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram.

For example, without limitation, operation **1702** may be performed prior to operation **1700** in **Figure 17****.** In some illustrative examples, operation **1604** may be performed prior to operation **1600** in **Figure 16****.**

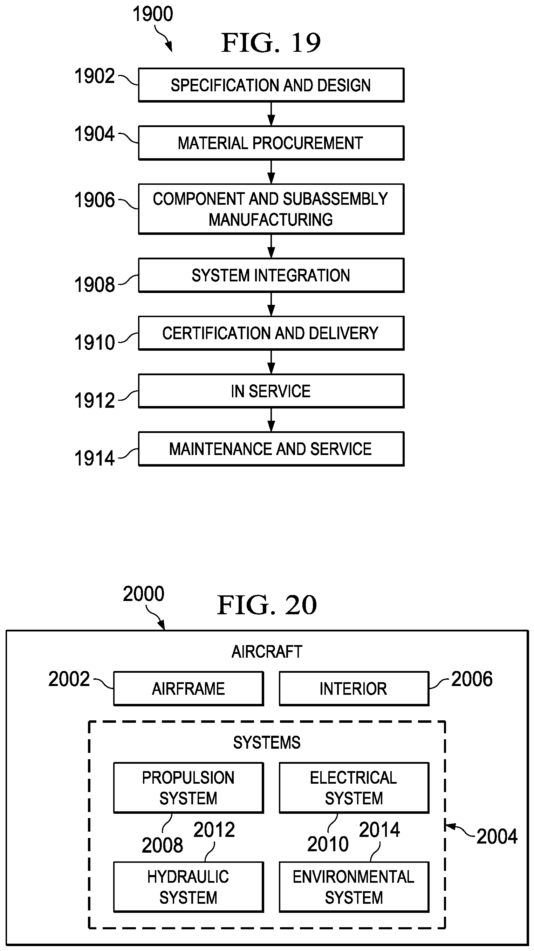

Illustrative embodiments of the disclosure may be described in the context of aircraft manufacturing and service method **1900** as shown in **Figure 19** and aircraft **2000** as shown in **Figure 20****.** Turning first to **Figure 19**, an illustration of an aircraft manufacturing and service method is depicted in the form of a block diagram in accordance with an illustrative embodiment. During pre-production, aircraft manufacturing and service method **1900** may include specification and design **1902** of aircraft **2000** in **Figure 20** and material procurement **1904.**

During production, component and subassembly manufacturing **1906** and system integration **1908** of aircraft **2000** in **Figure 20** takes place. Thereafter, aircraft **2000** in **Figure 20** may go through certification and delivery **1910** in order to be placed in service **1912.** While in service **1912** by a customer, aircraft **2000** in **Figure 20** is scheduled for routine maintenance and service **1914**, which may include modification, reconfiguration, refurbishment, and other maintenance or service.

Each of the processes of aircraft manufacturing and service method **1900** may be performed or carried out by at least one of a system integrator, a third party, or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 20**, an illustration of an aircraft is depicted in the form of a block diagram in which an illustrative embodiment may be implemented. In this example, aircraft **2000** is produced by aircraft manufacturing and service method **1900** in **Figure 19** and may include airframe **2002** with plurality of systems **2004** and interior **2006.** Examples of systems **2004** include one or more of propulsion system **2008,** electrical system **2010,** hydraulic system **2012,** and environmental system **2014.** Any number of other systems may be included. Although an aerospace example is shown, different illustrative embodiments may be applied to other industries, such as the automotive industry.

Apparatuses and methods embodied herein may be employed during at least one of the stages of aircraft manufacturing and service method **1900** in **Figure 19****.** In particular, photogrammetry system **108** from **Figure 1** may be used to model the surface of any number of structures of aircraft **2000** during any one of the stages of aircraft manufacturing and service method **1900.** For example, without limitation, photogrammetry system **108** from **Figure 1** may be used to model the surface of a structure of aircraft **2000** during at least one of component and subassembly manufacturing **1906,** system integration **1908,** certification and delivery **1910,** in service **1912,** routine maintenance and service **1914,** or some other stage of aircraft manufacturing and service method **1900.**

As one illustrative example, number of targets **112** from **Figure 1** may be removably attached to number of retaining members **113** in **Figure 1****.** Number of retaining members **113** may then be removably attached to the surface of aircraft **2000** to indirectly removably attach number of targets **112** for photogrammetry system **108** to the surface of aircraft **2000.** In one illustrative example, number of retaining members **113** may be removably attached to airframe **2002,** propulsion system **2008,** or some other portion of aircraft **2000.** Photogrammetry system **108** may generate imaging data 102 of number of targets **112** on the surface of aircraft **2000** that may then be used to generate a three-dimensional model of the surface of aircraft **2000.**

In one illustrative example, components or subassemblies produced in component and subassembly manufacturing **1906** in **Figure 19** may be fabricated or manufactured in a manner similar to components or subassemblies produced while aircraft **2000** is in service **1912** in **Figure 19****.** As yet another example, one or more apparatus embodiments, method embodiments, or a combination thereof may be utilized during production stages, such as component and subassembly manufacturing **1906** and system integration **1908** in **Figure 19****.** One or more apparatus embodiments, method embodiments, or a combination thereof may be utilized while aircraft **2000** is in service **1912,** during maintenance and service **1914** in **Figure 19****,** or both. The use of a number of the different illustrative embodiments may substantially expedite the assembly of and reduce the cost of aircraft **2000.**

Thus, the illustrative embodiments provide a retaining member, such as retaining member **128** in **Figure 1****,** which may be used to indirectly removably attach a target for a photogrammetry system, such as target **122** for photogrammetry system **108** in **Figure 1****,** to the surface of a structure, such as surface **104** of structure **106** in **Figure 1****.** Retaining member **128** may provide a means of removably attaching any number of targets onto surface **104** at the same time. Using retaining member **128** may reduce the overall time, effort, and cost needed to perform photogrammetry. Further, using retaining member **128** to hold and stabilize the targets may improve the accuracy of the output generated using photogrammetry.

The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A photogrammetry system (108) for aircraft comprising:
a magnetic photogrammetric target (122, 204, 205); and
a spool (302) of retaining tape (300), the tape comprising:
a body;
an engagement material (138, 306) associated with the body and configured for use in removably attaching the retaining tape to a surface of an aircraft (202); and
a magnetic material (136, 304) associated with the body and configured for use in removably attaching the magnetic target to the retaining tape,
wherein the retaining tape is configured to hold the magnetic target in a fixed position relative to the retaining tape using the magnetic material.

2. The system of claim 1, wherein the magnetic material is associated with a first side (132, 303) of the body and the engagement material is associated with a second side (134, 305) of the body.

3. The system of claim 1, wherein the magnetic material exerts an attractive force sufficiently strong to hold the magnetic target when the retaining tape is in different orientations.

4. The retaining member of claim 1, wherein the magnetic material is magnetic paint.

5. The system of claim 1, wherein the engagement material is a vinyl film.

6. The system of claim 5, wherein the engagement material is a static cling material configured to cling to the surface of the structure using static electricity.

7. The system of claim 1, wherein the body comprises:
a first portion having a first inner surface and a first outer surface in which the first outer surface is located at a first side of the body, wherein the first portion is comprised of the magnetic material; and
a second portion having a second inner surface that contacts the first inner surface of the first portion and a second outer surface that is located at a second side of the body in which the engagement material forms a coating on the second outer surface of the second portion, wherein the second portion is comprised of a material selected from one of a plastic material, a metal material, and a composite material.

8. A method for removably attaching a magnetic target of a photogrammetry system as defined in claim 1 to a surface of an aircraft, the method comprising:
configuring a robotic device (500, 502) to hold a spool of the retaining tape;
rolling a portion of the retaining tape onto the surface to thereby attach, removably, the retaining tape to the surface of the aircraft using the engagement material; and
attaching, removably, the magnetic target to the retaining tape using the magnetic material associated with the body of the retaining tape.

9. The method of claim 8, wherein attaching, removably, the magnetic target to the retaining tape comprises:
positioning the magnetic target relative to a first side of the retaining tape; and
holding the magnetic target in a fixed position relative to the retaining tape using the magnetic material, wherein the magnetic material is associated with the first side of the retaining tape.

10. The method of claim 8, wherein attaching, removably, the retaining tape to the surface of the structure comprises:
attaching, removably, the retaining tape to the surface of the structure using the engagement material prior to attaching the magnetic target to the retaining tape.

## Patentansprüche

1. Photogrammetrie-System (108) für Flugzeuge, umfassend:
ein magnetisches photogrammetrisches Messobjekt (122, 204, 205); und eine Spule (302) mit Halteband (300), wobei das Band umfasst:
einen Körper;
ein Verbindungsmaterial (138, 306), das dem Körper zugeordnet und zum Gebrauch beim lösbaren Befestigen des Haltebandes an einer Oberfläche eines Flugzeugs (202) konfiguriert ist; und
ein magnetisches Material (136, 304), das dem Körper zugeordnet und zur Verwendung beim lösbaren Befestigen des magnetischen Messobjekts an dem Halteband konfiguriert ist,
wobei das Halteband konfiguriert ist, um das magnetische Messobjekt unter Verwendung des magnetischen Materials in einer festen Position relativ zu dem Halteband zu halten.

2. System nach Anspruch 1, bei dem das magnetische Material einer ersten Seite (132, 303) des Körpers und das Verbindungsmaterial einer zweiten Seite (134, 305) des Körpers zugeordnet ist.

3. System nach Anspruch 1, bei dem das magnetische Material eine Anziehungskraft ausübt, die stark genug ist, um das magnetische Messobjekt zu halten, wenn sich das Halteband in unterschiedlichen Orientierungen befindet.

4. Halteelement nach Anspruch 1, bei dem das magnetische Material eine magnetische Farbe ist.

5. System nach Anspruch 1, bei dem das Verbindungsmaterial eine Vinylfolie ist.

6. System nach Anspruch 5, bei dem das Verbindungsmaterial ein statisches Haftmaterial ist, das konfiguriert ist, um unter Verwendung statischer Elektrizität an der Oberfläche der Struktur zu haften.

7. System nach Anspruch 1, bei dem der Körper umfasst:
einen ersten Abschnitt mit einer ersten Innenfläche und einer ersten Außenfläche, wobei sich die erste Außenfläche auf einer ersten Seite des Körpers befindet, wobei der erste Abschnitt aus dem magnetischen Material besteht; und
einen zweiten Abschnitt mit einer zweiten Innenfläche, die die erste Innenfläche des ersten Abschnitts kontaktiert, und einer zweiten Außenfläche, die sich auf einer zweiten Seite des Körpers befindet, wobei das Eingriffsmaterial eine Beschichtung auf der zweiten Außenfläche des zweiten Abschnitts bildet, wobei der zweite Abschnitt aus einem unter einem Kunststoffmaterial, einem Metallmaterial und einem Verbundmaterial ausgewählten Material besteht.

8. Verfahren zum lösbaren Befestigen eines magnetischen Messobjekts eines Photogrammetrie-Systems nach Anspruch 1 an einer Oberfläche eines Flugzeugs, wobei das Verfahren umfasst:
Konfigurieren einer Robotervorrichtung (500, 502) zum Halten einer Spule mit dem Halteband;
Abrollen eines Abschnitts des Haltebandes auf die Oberfläche, um dadurch das Halteband unter Verwendung des Verbindungsmaterials lösbar an der Oberfläche des Flugzeugs zu befestigen; und
lösbares Befestigen des magnetischen Messobjekts an dem Halteband unter Verwendung des dem Körper des Haltebandes zugeordneten magnetischen Materials.

9. Verfahren nach Anspruch 8, bei dem das lösbare Befestigen des magnetischen Messobjekts an dem Halteband umfasst:
Positionieren des magnetischen Messobjekts in Bezug auf eine erste Seite des Haltebandes; und
Halten des magnetischen Messobjekts in einer festen Position in Bezug auf das Halteband unter Verwendung des magnetischen Materials,
wobei das magnetische Material der ersten Seite des Haltebandes zugeordnet ist.

10. Verfahren nach Anspruch 8, bei dem das lösbare Befestigen des Haltebandes an der Oberfläche der Struktur umfasst:
lösbares Befestigen des Haltebandes an der Oberfläche der Struktur unter Verwendung des Verbindungsmaterials, bevor das magnetische Messobjekt an dem Halteband befestigt wird.

## Revendications

1. Système de photogrammétrie (108) pour aéronef comprenant :
une cible photogrammétrique magnétique (122, 204, 205) ; et
une bobine (302) de ruban de retenue (300), le ruban comprenant :
un corps ;
un matériau de contact (138, 306) associé au corps et configuré pour être utilisé pour attacher de manière amovible le ruban de retenue à une surface d'un aéronef (202) ; et
un matériau magnétique (136, 304) associé au corps et configuré pour être utilisé pour attacher de manière amovible la cible magnétique au ruban de retenue,
dans lequel le ruban de retenue est configuré pour maintenir la cible magnétique dans une position fixe par rapport au ruban de retenue en utilisant le matériau magnétique.

2. Système selon la revendication 1, dans lequel le matériau magnétique est associé à un premier côté (132, 303) du corps et le matériau de contact est associé à un second côté (134, 305) du corps.

3. Système selon la revendication 1, dans lequel le matériau magnétique exerce une force d'attraction suffisamment forte pour maintenir la cible magnétique lorsque le ruban de retenue est dans des orientations différentes.

4. Système selon la revendication 1, dans lequel le matériau magnétique est une peinture magnétique.

5. Système selon la revendication 1, dans lequel le matériau de contact est un film de vinyle.

6. Système selon la revendication 5, dans lequel le matériau de contact est un matériau à adhérence statique configuré pour adhérer à la surface de la structure en utilisant de l'électricité statique.

7. Système selon la revendication 1, dans lequel le corps comprend :
une première partie ayant une première surface intérieure et une première surface extérieure, dans laquelle la première surface extérieure est située sur un premier côté du corps, dans lequel la première partie est constituée du matériau magnétique ; et
une seconde partie ayant une seconde surface intérieure qui vient en contact avec la première surface intérieure de la première partie et une seconde surface extérieure qui est située sur un second côté du corps dans lequel le matériau de contact forme un revêtement sur la seconde surface extérieure de la seconde partie, dans lequel la seconde partie est constituée d'un matériau choisi parmi une matière plastique, un matériau métallique, et un matériau composite.

8. Procédé pour attacher de manière amovible une cible magnétique d'un système de photogrammétrie selon la revendication 1 à une surface d'un aéronef, le procédé comprenant les étapes consistant à :
configurer un dispositif robotique (500, 502) pour maintenir une bobine du ruban de retenue ;
rouler une partie du ruban de retenue sur la surface pour ainsi attacher, de manière amovible, le ruban de retenue à la surface de l'avion en utilisant le matériau de contact ; et
attacher, de manière amovible, la cible magnétique au ruban de retenue en utilisant le matériau magnétique associé au corps du ruban de retenue.

9. Procédé selon la revendication 8, dans lequel l'étape consistant à attacher, de manière amovible, la cible magnétique au ruban de retenue comprend les étapes consistant à :
positionner la cible magnétique par rapport à un premier côté du ruban de retenue ; et
maintenir la cible magnétique dans une position fixe par rapport au ruban de retenue en utilisant le matériau magnétique, dans lequel le matériau magnétique est associé au premier côté du ruban de retenue.

10. Procédé selon la revendication 8, dans lequel l'étape consistant à attacher, de manière amovible, le ruban de retenue à la surface de la structure comprend l'étape consistant à :
attacher, de manière amovible, le ruban de retenue à la surface de la structure en utilisant le matériau de contacter avant d'attacher la cible magnétique au ruban de retenue.
